# EUROPEAN PATENT APPLICATION

(11) **EP 4 760 436 A1**
(43) Date of publication of application: **17.06.2026**
(21) Application number: 25219790.0
(22) Date of filing: 01.12.2025
(51) Int. Cl.: G05D 1/243, G05D 1/622, B66F 9/075

(54) **INDUSTRIAL VEHICLE**

(30) Priority: 13.12.2024 JP 2024218717
(71) Applicant: KABUSHIKI KAISHA TOYOTA JIDOSHOKKI, Kariya-shi, Aichi 448-8671 (JP)
(72) Inventor: MIHOICHI, Takuto, Kariya-shi, Aichi, 448-8671 (JP); ISHIZAKI, Masataka, Kariya-shi, Aichi, 448-8671 (JP)
(74) Representative: Hoffmann Eitle

(57) **Abstract**

An industrial vehicle (10) includes: a vehicle body (11); a detector (52, 53, 54) configured to detect an obstacle present around the vehicle body (11); and a controller (31) configured to restrict the industrial vehicle (10) from starting to move when the obstacle detected by the detector (52, 53, 54) is present in a start restriction area (A). The detector (52, 53, 54) includes: a front side detector (53, 54) configured to detect the obstacle in front of the vehicle body (11); a rear side detector (52) configured to detect the obstacle present behind the vehicle body (11); a left side detector (53) configured to detect the obstacle present on the left side of the vehicle body (11); and a right side detector (54) configured to detect the obstacle present on the right side of the vehicle body (11). The controller (31) changes the start restriction area (A) based on a traveling direction and a steering angle of the industrial vehicle (10).

## Description

The present invention relates to an industrial vehicle.

### BACKGROUND ART

An industrial vehicle mentioned in Japanese Patent Application Publication No. 2021-135694 includes: a plurality of cameras for capturing images around the industrial vehicle; and a processor. The processor recognizes an object in the images captured by the cameras. The processor calculates the position of the object relative to the industrial vehicle. The processor determines the volume of an alarm unit based on the position of the object and the driver's line of sight.

Depending on the traveling direction and the steering angle of the industrial vehicle, the industrial vehicle may come into contact with an obstacle present in an area located opposite to the traveling direction of the industrial vehicle.

The present invention, which has been made in view of the above problems, is directed to providing an industrial vehicle that is capable of avoiding contact with an obstacle present in an area located opposite to the traveling direction of the industrial vehicle.

### SUMMARY

In accordance with an aspect of the present invention, there is provided an industrial vehicle that includes: a vehicle body; a detector configured to detect an obstacle present around the vehicle body; and a controller configured to restrict the industrial vehicle from starting to move when the obstacle detected by the detector is present in a start restriction area. The detector includes: a front side detector configured to detect the obstacle in front of the vehicle body; a rear side detector configured to detect the obstacle present behind the vehicle body; a left side detector configured to detect the obstacle present on the left side of the vehicle body; and a right side detector configured to detect the obstacle present on the right side of the vehicle body. The controller changes the start restriction area based on a traveling direction and a steering angle of the industrial vehicle.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a perspective view of an industrial vehicle;
FIG. 2 is a schematic view of the industrial vehicle;
FIG. 3 is a flowchart of a process performed by a detector;
FIG. 4 is a flowchart of another process performed by the detector;
FIG. 5 is a schematic diagram illustrating a rear region and side regions of the industrial vehicle;
FIG. 6 is a diagram illustrating a start restriction area when a traveling direction command from a controller is neutral;
FIG. 7 is a diagram illustrating the start restriction area when the traveling direction command from the controller is reverse and the industrial vehicle is traveling straight;
FIG. 8 is a diagram illustrating the start restriction area when the traveling direction command from the controller is reverse and the industrial vehicle is turning in a first left turning state;
FIG. 9 is a diagram illustrating the start restriction area when the traveling direction command from the controller is reverse and the industrial vehicle is turning in a second left turning state;
FIG. 10 is a diagram illustrating the start restriction area when the traveling direction command from the controller is reverse and the industrial vehicle is turning in a third left turning state;
FIG. 11 is a diagram illustrating the start restriction area when the traveling direction command from the controller is forward and the industrial vehicle is traveling straight;
FIG. 12 is a diagram illustrating the start restriction area when the traveling direction command from the controller is forward and the industrial vehicle is turning in the first left turning state;
FIG. 13 is a diagram illustrating the start restriction area when the traveling direction command from the controller is forward and the industrial vehicle is turning in the second left turning state;
FIG. 14 is a diagram illustrating the start restriction area when the traveling direction command from the controller is forward and the industrial vehicle is turning in the third left turning state; and
FIG. 15 is a flowchart of a start restriction control performed by the controller.

### DETAILED DESCRIPTION OF THE EMBODIMENTS

The following will describe an industrial vehicle according to an embodiment.

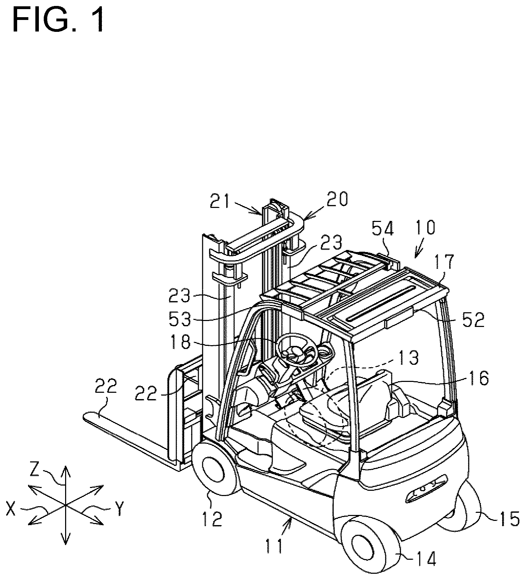

FIG. 1 illustrates an industrial vehicle 10 that includes a vehicle body 11, two front wheels 12, 13, two rear wheels 14, 15, a driver's seat 16, and a load handling device 20. The industrial vehicle 10 is, for example, a forklift truck or a towing tractor. In the present embodiment, a counterbalance forklift truck serves as the industrial vehicle 10. The two front wheels 12, 13 include a left front wheel 12 and a right front wheel 13. The front wheels 12, 13 are drive wheels. The two rear wheels 14, 15 include a left rear wheel 14 and a right rear wheel 15. The rear wheels 14, 15 are steered wheels. Throughout the specification, directional terms such as front, rear, left, and right are used with reference to the orientation of the industrial vehicle 10. The vehicle body 11 includes an overhead guard 17 disposed above the driver's seat 16.

The load handling device 20 is disposed in front of the driver's seat 16. The load handling device 20 includes a mast 21, two forks 22, and a lift cylinder 23. The mast 21 is disposed at a front portion of the vehicle body 11. The forks 22 are movable up and down along the mast 21. The forks 22 handle a load. The lift cylinder 23 is a hydraulic cylinder. The lift cylinder 23 extends and contracts so that the mast 21 moves up and down. As the mast 21 moves up and down, the forks 22 move up and down. The industrial vehicle 10 according to the present embodiment is operated by an operator to perform load handling and transporting.

The industrial vehicle 10 includes a steering wheel 18. The steering wheel 18 is disposed in front of the driver's seat 16. The steering wheel 18 is operated by the operator. The steering angle of the industrial vehicle 10 changes depending on the operation of the steering wheel 18.

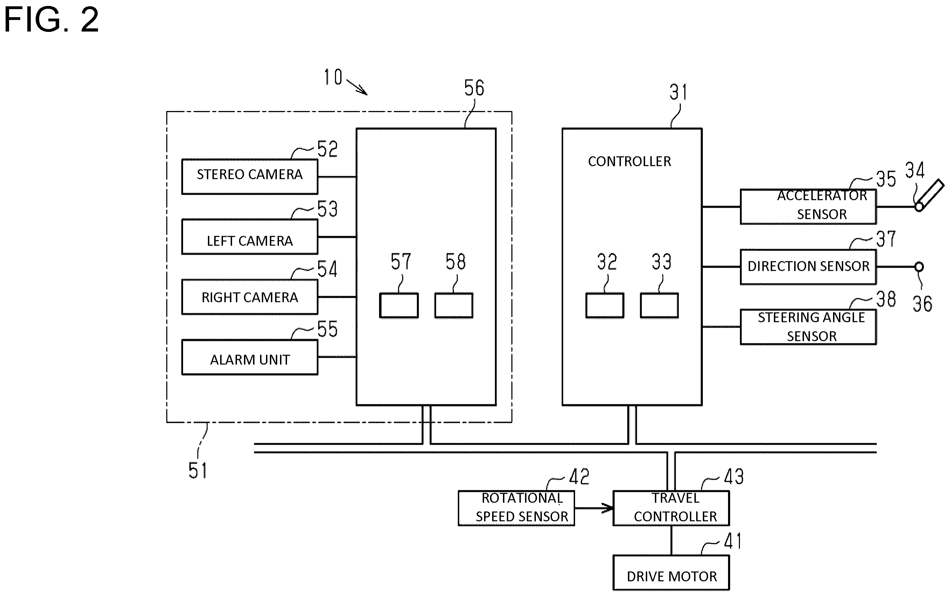

As illustrated in FIG. 2, the industrial vehicle 10 includes a controller 31 that is configured to control traveling and load handling of the industrial vehicle 10. The controller 31 includes a processor 32 and a memory 33. The processor 32 is, for example, a central processing unit (CPU), a graphics processing unit (GPU), or a digital signal processor (DSP). The memory 33 includes a random access memory (RAM) and a read only memory (ROM). The memory 33 stores various programs for operating the controller 31. The memory 33 stores program codes or commands configured to cause the processor 32 to execute processes. The memory 33, i.e., a computer-readable medium including a non-transitory computer-readable storage medium, includes any media accessible by general or dedicated computers. The controller 31 may include a hardware circuit, such as an application specific integrated circuit (ASIC) or a field programmable gate array (FPGA). The controller 31, which is a processing circuit, may include one or more processors that operate according to computer programs, one or more hardware circuits, such as the ASIC or the FPGA, or a combination thereof.

The industrial vehicle 10 includes an accelerator operation unit 34. The accelerator operation unit 34 is, for example, a pedal. The accelerator operation unit 34 is operated by the operator on board the industrial vehicle 10.

The industrial vehicle 10 includes an accelerator sensor 35. The accelerator sensor 35 detects an operation amount of the accelerator operation unit 34, i.e., the position of the accelerator operation unit 34. The accelerator sensor 35 outputs an electric signal corresponding to the position of the accelerator operation unit 34 to the controller 31. The controller 31 detects the position of the accelerator operation unit 34 based on the electric signal from the accelerator sensor 35.

The industrial vehicle 10 includes a direction operation unit 36. The direction operation unit 36 is, for example, a lever. The direction operation unit 36 is operated to determine the traveling direction of the industrial vehicle 10. The direction operation unit 36 is moved to the forward position or the reverse position from the neutral position. The direction operation unit 36 is moved from the neutral position to the forward position to move the industrial vehicle 10 forward. The direction operation unit 36 is moved from the neutral position to the reverse position to move the industrial vehicle 10 in reverse.

The industrial vehicle 10 includes a direction sensor 37. The direction sensor 37 detects the position of the direction operation unit 36. The direction sensor 37 outputs an electrical signal corresponding to the operating direction of the direction operation unit 36, to the controller 31. The controller 31 detects the position of the direction operation unit 36 based on the electrical signal from the direction sensor 37. The controller 31 controls the traveling direction of the industrial vehicle 10 based on the position of the direction operation unit 36.

The traveling direction commands from the controller 31 to the industrial vehicle 10 include neutral, forward, and reverse. When the direction operation unit 36 is set to the neutral position, the traveling direction command is neutral. When the traveling direction command is neutral, the industrial vehicle 10 does not travel even if the accelerator operation unit 34 is operated. When the direction operation unit 36 is set to the forward position, the traveling direction command is forward. When the traveling direction command is forward, the industrial vehicle 10 travels forward in response to the operation of the accelerator operation unit 34. When the direction operation unit 36 is set to the reverse position, the traveling direction command is reverse. When the traveling direction command is reverse, the industrial vehicle 10 travels in reverse in response to the operation of the accelerator operation unit 34.

The industrial vehicle 10 includes a steering angle sensor 38. The steering angle sensor 38 detects steering angles of the rear wheels 14, 15. The steering angle sensor 38 outputs an electric signal corresponding to the steering angles to the controller 31. The controller 31 detects the steering angles based on the electrical signal from the steering angle sensor 38. The steering angles correspond to the inclinations of the rear wheels 14, 15 relative to the front-rear direction of the industrial vehicle 10. When each of the steering angles is 0, the rear wheels 14, 15 face forward in the front-rear direction of the industrial vehicle 10. When the steering angle is negative, the industrial vehicle 10 is turning left. When the steering angle is positive, the industrial vehicle 10 is turning right. The turning direction is represented by positive or negative value of the steering angle. Accordingly, the steering angle becomes greater as the steering angle increases or decreases from 0, in other words, as the absolute value of the steering angle becomes greater.

The industrial vehicle 10 includes a drive motor 41. The drive motor 41 rotates the front wheels 12, 13 to propel the industrial vehicle 10. The drive motor 41 is provided for each of the front wheels 12, 13.

The industrial vehicle 10 includes a travel controller 43. The travel controller 43 is a motor driver that controls the rotational speed of the drive motor 41. The travel controller 43 is provided for each of the drive motors 41.

The industrial vehicle 10 includes a rotational speed sensor 42. The rotational speed sensor 42 detects a rotational speed of the drive motor 41. The rotational speed sensor 42 is, for example, a rotary encoder. The rotational speed sensor 42 outputs an electric signal corresponding to the rotational speed of the drive motor 41 to the travel controller 43. The travel controller 43 detects the rotational speed of the drive motor 41 based on the electrical signal from the rotational speed sensor 42.

The industrial vehicle 10 includes an obstacle detector 51. The obstacle detector 51 includes a stereo camera 52, two side cameras 53, 54, an alarm unit 55, and a detector 56.

As illustrated in FIG. 1, the stereo camera 52 is installed, for example, on the overhead guard 17. The stereo camera 52 is disposed on the industrial vehicle 10 so as to have a bird's-eye view of the road surface on which the industrial vehicle 10 travels. The stereo camera 52 according to the present embodiment captures images of a view behind the industrial vehicle 10. The stereo camera 52 includes two cameras arranged at a distance from each other, and the two cameras of the stereo camera 52 capture images.

The side cameras 53, 54 are installed, for example, on the overhead guard 17. The side cameras 53, 54 are disposed on the industrial vehicle 10 so as to have a bird's-eye view of the road surface on which the industrial vehicle 10 travels. The side cameras 53, 54 include a left camera 53 for capturing images on the left side of the industrial vehicle 10, and a right camera 54 for capturing images on the right side of the industrial vehicle 10. In the present embodiment, monocular cameras serve as the side cameras 53, 54.

The alarm unit 55 issues an alarm to at least one of a worker around the industrial vehicle 10 and the operator of the industrial vehicle 10. The alarm unit 55 is, for example, a buzzer. The detector 56 has a hardware configuration similar to that of the controller 31, for example. The detector 56 includes a processor 57 and a memory 58, for example.

The detector 56 acquires images from the stereo camera 52 and the side cameras 53, 54 to detect obstacles. The obstacles are objects that may hinder the industrial vehicle 10 from traveling. The obstacles include a person and another physical object. First, the control performed when the detector 56 detects obstacles using the images acquired from the stereo camera 52 will be described.

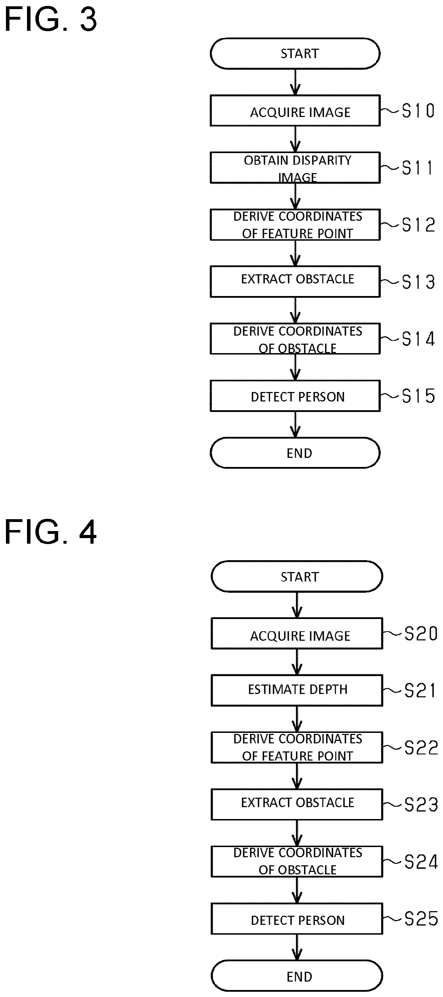

As illustrated in FIG. 3, the detector 56 acquires an image from the stereo camera 52 at step S10. The detector 56 performs stereo imaging at step S11 to obtain a disparity image. Stereo imaging is processing to compare the images captured by the two cameras of the stereo camera 52 to calculate the disparity, which is the pixel difference, between corresponding feature points in the images. The feature points represent, for example, the outline of each of the obstacles in the images. The disparity image is a visual representation of the pixel-wise disparity values.

At step S12, the detector 56 derives coordinates of the feature points in a world coordinate system, which is a coordinate system in a real-world space. As illustrated in FIG. 1, the world coordinate system includes an X-axis extending in the horizontal direction and in a vehicle width direction of the industrial vehicle 10, a Y-axis extending in the horizontal direction and orthogonal to the X-axis, and a Z-axis extending in the vertical direction in a state where the industrial vehicle 10 is on a horizontal plane. The detector 56 derives the coordinates of the feature points in the camera coordinate system based on the baseline length of the stereo camera 52, the focal length of the stereo camera 52, and the disparity image obtained at step S11. The stereo camera 52 serves as the origin of the camera coordinate system. The detector 56 performs a coordinate transformation of the feature points from the camera coordinate system to the world coordinate system.

The detector 56 clusters the feature points so as to extract the obstacles at step S13. Specifically, the detector 56 clusters a set of feature points, which are assumed to represent the same obstacle as one point group, and extracts the point group as the obstacle. At step S13, the feature points are clustered in various ways.

The detector 56 derives the coordinates of the obstacle in the world coordinate system at step S14. The coordinates of the obstacle may be derived from the coordinates of the feature points in the same clusters. The coordinates of the obstacle in the world coordinate system represent the position of the obstacle relative to the industrial vehicle 10. Specifically, the X coordinate of obstacle represents the distance from the origin to the obstacle in the right-left direction of the industrial vehicle 10. The Y coordinate of the obstacle represents the distance from the origin to the obstacle in the front-rear direction of the industrial vehicle 10. For example, the X and Y coordinates of the origin of the world coordinate system represent the position of the stereo camera 52, and the Z coordinate of the origin of the world coordinate system represents the road surface. The Z coordinate of the obstacle in the world coordinate system represents the height of the obstacle from the road surface.

The detector 56 then performs person detecting at step S15. The person detecting is processing to determine whether or not the obstacle is a person. In the present embodiment, the detector 56 performs person detecting with an image captured by one of the two cameras of the stereo camera 52. The detector 56 converts the coordinates of the obstacle in the world coordinate system obtained at step S14 into camera coordinates, and further converts the camera coordinates of the obstacle into image coordinates of the image captured by the camera. The detector 56 performs person detecting with the image coordinates of the obstacle. The person detecting uses features, for example. The detector 56 extracts the features at the coordinates of the obstacle in the image. The features are histogram of oriented gradients (HOG) features or Haar-like features. The detector 56 compares the features extracted from the image with a data dictionary to determine whether or not the obstacle is a person. The data dictionary is, for example, data of features extracted from the images showing a person. The obstacle that is not determined as a person at step S15 is an object. By performing person detecting at step S15, the detector 56 detects the coordinates of a person and another physical object in the world coordinate system.

Next, the control performed when the detector 56 detects obstacles using images acquired from the side cameras 53, 54 will be described. The detector 56 detects obstacles separately using the image acquired from the left camera 53 and the image acquired from the right camera 54.

As illustrated in FIG. 4, the detector 56 acquires an image from the side camera 53 and an image from the side camera 54 at step S20. Next, the detector 56 performs depth estimation at step S21. Depth estimation is a technique for estimating the distance between the side cameras 53, 54 and the object point associated with a given pixel in each image. Depth estimation is performed using, for example, Structure from Motion (SfM) or machine learning using Convolutional Neural Network (CNN). Depth information may be obtained from a distance sensor.

At step S22, the detector 56 derives coordinates of the feature points in the world coordinate system by using the depth information. The detector 56 derives coordinates of the feature points in a side camera coordinate system by using the depth information. Each of the side cameras 53, 54 serves as the origin of the side camera coordinate system. From the image acquired from the left camera 53, the coordinates of the feature points are derived in the side camera coordinate system with the left camera 53 as the origin. From the image acquired from the right camera 54, the coordinates of the feature points are derived in the side camera coordinate system with the right camera 54 as the origin. The detector 56 performs a coordinate transformation of the feature points from the side camera coordinate system to the world coordinate system.

The detector 56 clusters the feature points so as to extract the obstacles at step S23. The processing performed in step S23 is the same as that performed in step S13. The detector 56 derives the coordinates of the obstacles in the world coordinate system at step S24. The processing performed in step S24 is the same as that performed in step S14.

The detector 56 then performs person detecting at step S25. The person detecting performed in step S25 is the same as that performed in step S15. At step 25, the detector 56 perform person detecting with the image captured by each of the side cameras 53, 54. By performing person detecting at step S25, the detector 56 detects the coordinates of a person and another physical object in the world coordinate system.

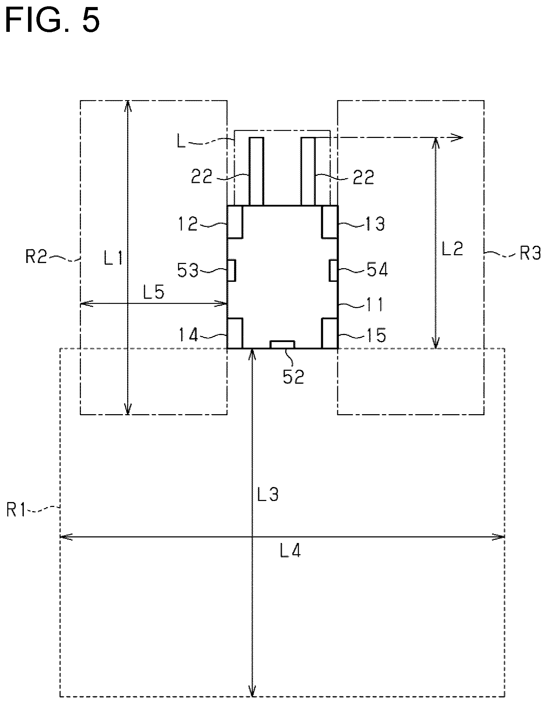

As illustrated in FIG. 5, the detector 56 detects an obstacle present in a rear region R1 behind the vehicle body 11 by using images acquired from the stereo camera 52. The stereo camera 52 serves as the rear side detector of the present invention that is configured to detect an obstacle present behind the vehicle body 11.

The detector 56 detects obstacles present in side regions R2, R3 (i.e., left side region R2 and right side region R3) respectively on the opposite sides of the vehicle body 11 by using images acquired from the side cameras 53, 54. The detector 56 detects an obstacle present in the left side region R2 on the left side of the vehicle body 11 by using an image acquired from the left camera 53. The detector 56 detects an obstacle present in the right side region R3 on the right side of the vehicle body 11 by using an image acquired from the right camera 54.

The left side region R2 and the right side region R3 are equal in size. The left side region R2 and the right side region R3 are symmetrical with respect to a line passing through the center of the industrial vehicle 10 in the width direction of the industrial vehicle 10. The dimension of each of the left side region R2 and the right side region R3 in the front-rear direction of the industrial vehicle 10 is denoted as dimension L1. The dimension between the distal end of each fork 22 and the rear end of the vehicle body 11 in the front-rear direction of the vehicle body 11 is denoted as dimension L2. The dimension L1 is longer than the dimension L2. The front side of each of the side regions R2, R3 is located in front of the front end of the vehicle body 11. The rear side of each of the side regions R2, R3 is located behind the rear end of the vehicle body 11. Accordingly, the side regions R2, R3 include the area in front of the vehicle body 11 and the area behind the vehicle body 11. This allows the detector 56 to detect an obstacle in front of the vehicle body 11 and an obstacle behind the vehicle body 11 from images acquired from the left camera 53 and the right camera 54. The left camera 53 serves as the left side detector of the present invention that is configured to detect an obstacle present on the left side of the vehicle body 11. The right camera 54 serves as the right side detector of the present invention that is configured to detect an obstacle present on the right side of the vehicle body 11. The left camera 53 and the right camera 54 also serve as the front side detector of the present invention that is configured to detect an obstacle present in front of the vehicle body 11. The stereo camera 52 and the side cameras 53, 54 each serve as the detector of the present invention that is configured to detect an obstacle present around the vehicle body 11.

The rear region R1 is wider than each of the side region R2 and the side region R3. The dimension of the rear region R1 in the front-rear direction of the industrial vehicle 10 is denoted as dimension L3. The dimension L3 is longer than the dimension L1 of each of the left side region R2 and the right side region R3 in the front-rear direction of the industrial vehicle 10. The dimension of the rear region R1 in the right-left direction of the industrial vehicle 10 is denoted as dimension L4. The dimension of each of the side region R2 and the side region R3 in the right-left direction is denoted as dimension L5. The dimension **L4** is longer than the dimension L5. A part of the rear region R1 and a part of each of the side region R2 and the side region R3 overlap each other. Specifically, a part of the rear region R1 overlaps a part of each of the side region R2 and the side region R3 extending rearward beyond the rear end of the vehicle body 11.

The following will describe a start restriction area. The controller 31 performs a start restriction control. The start restriction control is a control for restricting the industrial vehicle 10 from starting to move according to the position of the obstacle detected by the obstacle detector 51. First, the start restriction area used in the start restriction control will be described.

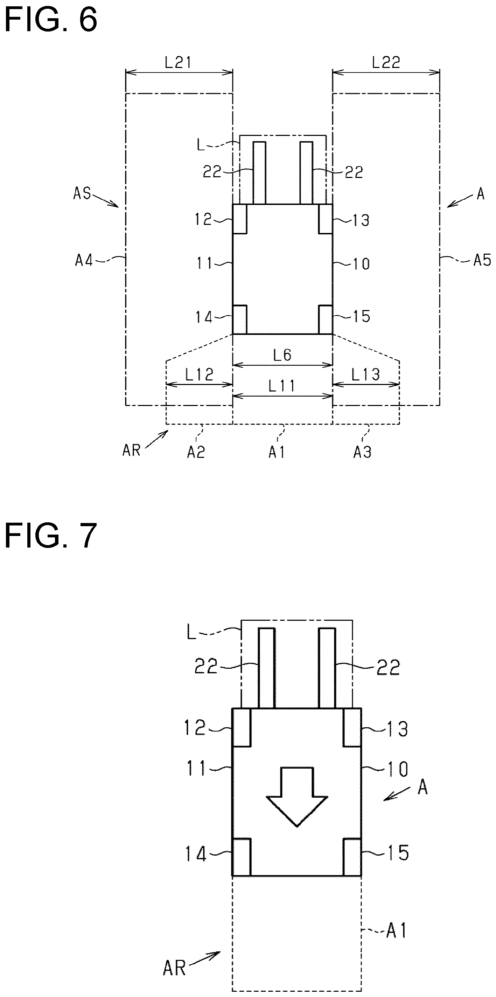

As illustrated in FIGS. 6 to 14, the controller 31 changes a start restriction area, which is denoted as start restriction area A, based on the traveling direction and the steering angle of the industrial vehicle 10. The controller 31 recognizes the traveling direction of the industrial vehicle 10 by acquiring the detection result of the direction sensor 37. The controller 31 recognizes the steering angle by acquiring the detection result of the steering angle sensor 38. The start restriction area A is defined, for example, by XY coordinates in the world coordinate system.

The start restriction area A includes a rear restriction area AR defined by the rear region R1. The rear restriction area AR is an area in which the industrial vehicle 10 is restricted from starting to move when the obstacle detected from the image of the stereo camera 52 is located in the rear restriction area AR.

The start restriction area A includes a side restriction area AS defined by the side region R2 and the side region R3. The side restriction area AS is an area in which the industrial vehicle 10 is restricted from starting to move when the obstacle detected from the image of each of the side camera 53 and the side camera 54 is located in the side restriction area AS.

When the traveling direction command from the controller 31 is neutral, a central area A1, a left area A2, and a right area A3 are provided as the rear restriction area AR as illustrated in FIG. 6. When the traveling direction command from the controller 31 is neutral, a left restriction area A4 and a right restriction area A5 are provided as the side restriction area AS. When the traveling direction command from the controller 31 is neutral, the shape of the rear restriction area AR and the shape of the side restriction area AS remains unchanged regardless of the steering angle.

The central area A1 is an area facing the industrial vehicle 10 in the front-rear direction. The dimension of the central area A1 in the right-left direction is denoted as dimension L11. The dimension of the industrial vehicle 10 in the right-left direction is denoted as dimension L6. The dimension L11 corresponds to the dimension L6. The central area A1 is an area through which the industrial vehicle 10 passes when the industrial vehicle 10 travels straight in reverse.

The left area A2 is an area to the left of the central area A1. The left area A2 is an area through which the industrial vehicle 10 passes when the industrial vehicle 10 turns left in reverse. The right area A3 is an area to the right of the central area A1. The right area A3 is an area through which the industrial vehicle 10 passes when the industrial vehicle 10 turns right in reverse.

The left restriction area A4 and the right restriction area A5 have, for example, the same shape. The left restriction area A4 is a rectangular area and extends along the left edge of the industrial vehicle 10. The right restriction area A5 is a rectangular area and extends along the right edge of the industrial vehicle 10. The front ends of the left restriction area A4 and the right restriction area A5 are located in front of the distal ends of the forks 22. The rear ends of the left restriction area A4 and the right restriction area A5 are located beyond the rear end of the vehicle body 11. The dimension of the left restriction area A4 in the right-left direction is denoted as dimension L21. The dimension of the left area A2 in the right-left direction is denoted as dimension L12. The dimension L21 is longer than the dimension L12. The dimension of the right restriction area A5 in the right-left direction is denoted as dimension L22. The dimension of the right area A3 in the right-left direction is denoted as dimension L13. The dimension L22 is longer than the dimension L13.

FIG. 7 illustrates the industrial vehicle 10 that is traveling straight in reverse in response to the reverse command. When the traveling direction command from the controller 31 is reverse and the industrial vehicle 10 is traveling straight in reverse, the central area A1 is provided as the rear restriction area AR. The side restriction areas AS are not provided in this case. The steering angle includes first to third angles. When the industrial vehicle 10 is traveling straight, the steering angle is equal to or greater than a negative first angle and is equal to or less than a positive first angle. The first angle is determined so that the industrial vehicle 10 is considered to be traveling straight. The first angle may be defined within a range of 3 degrees to 8 degrees, as appropriate, for example.

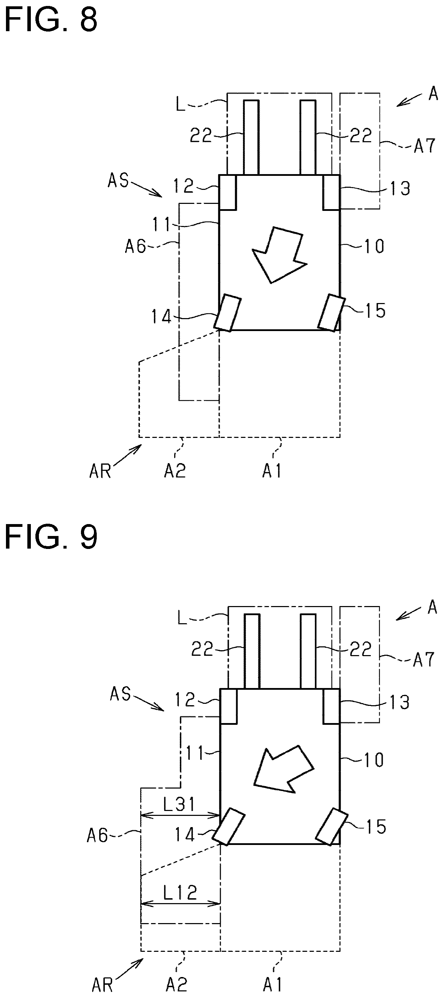

FIG. 8 illustrates the industrial vehicle 10 that is traveling in reverse in response to the reverse command and turning in a first turning state. When the traveling direction command from the controller 31 is reverse and the industrial vehicle 10 is turning in the first turning state, in addition to the central area A1, at least one of the left area A2 and the right area A3 is provided as the rear restriction area AR. In this state, a first traveling direction area A6 and a second traveling direction area A7 are provided as the side restriction area AS. The first turning state is a state in which the absolute value of the steering angle is greater than the first angle and is equal to or less than the second angle. The second angle is greater than the first angle. The second angle may be set within a range of 15 degrees to 30 degrees, as appropriate, for example. In the first turning state, the steering angle is larger than the steering angle when the industrial vehicle 10 is traveling straight. When the industrial vehicle 10 is turning in the first turning state, for example, the industrial vehicle 10 is traveling through a gently curved passage.

The first turning state includes a first left turning state (the vehicle 10 is turning to the left) and a first right turning state (the vehicle 10 is turning to the right). When the industrial vehicle 10 is turning in the first left turning state, the steering angle is equal to or greater than a negative second angle and is less than the negative first angle. When the industrial vehicle 10 is turning in the first right turning state, the steering angle is equal to or less than a positive second angle and is greater than the positive first angle.

When the industrial vehicle 10 is traveling in reverse and turning in the first left turning state, the central area A1 and the left area A2 are provided as the rear restriction area AR. The first traveling direction area A6 is an area for detecting an obstacle present ahead of the industrial vehicle 10 in the traveling direction of the industrial vehicle 10. When the industrial vehicle 10 is traveling in reverse, the first traveling direction area A6 is an area that extends rearward beyond the rear end of the vehicle body 11. The first traveling direction area A6 is an area that extends rearward along the vehicle body 11 and beyond the rear end of the vehicle body 11 from a position laterally adjacent to the front wheels 12, 13, for example. The first traveling direction area A6 serves as the start restriction area A located in the traveling direction.

The second traveling direction area A7 is an area for detecting an obstacle present in an area located opposite to the traveling direction of the industrial vehicle 10. When the industrial vehicle 10 is traveling in reverse, the second traveling direction area A7 is an area that extends forward beyond the front end of the vehicle body 11. The second traveling direction area A7 is an area that extends forward along the vehicle body 11 and beyond the distal end of the fork 22 from a position laterally adjacent to the front wheels 12, 13, for example. When a load L is handled by the forks 22, the second traveling direction area A7 may extend to the front end of the load L. The second traveling direction area A7 serves as the start restriction area A located opposite to the traveling direction.

When the industrial vehicle 10 is traveling in reverse and turning in the first left turning state, the first traveling direction area A6 extends along the left edge of the industrial vehicle 10. For example, the first traveling direction area A6 is a rectangular area and extends from the position adjacent to the left front wheel 12 to a position overlapping with the left area A2. The second traveling direction area A7 extends along the right edge of the industrial vehicle 10. For example, the second traveling direction area A7 is a rectangular area and extends forward from the position adjacent to the right front wheel 13 beyond the distal end of the fork 22.

When the industrial vehicle 10 is traveling in reverse and turning in the first right turning state, the central area A1 and the right area A3 are provided as the rear restriction area AR. When the industrial vehicle 10 is traveling in reverse and turning in the first right turning state, the first traveling direction area A6 extends along the right edge of the industrial vehicle 10. For example, the first traveling direction area A6 extends from the position adjacent to the right front wheel 13 to a position overlapping with the right area A3. The second traveling direction area A7 extends along the left edge of the industrial vehicle 10. For example, the second traveling direction area A7 extends forward from the position adjacent to the left front wheel 12 beyond the distal end of the fork 22.

FIG. 8 illustrates the start restriction area A when the industrial vehicle 10 is turning in the first left turning state. When the industrial vehicle 10 is turning in the first right turning state, the start restriction area A has a shape that is a right-left mirror image of the start restriction area A when the industrial vehicle 10 is turning in the first left turning state. Accordingly, the start restriction area A when the industrial vehicle 10 is turning in the first right turning state is not illustrated.

FIG. 9 illustrates the industrial vehicle 10 that is traveling in reverse in response to the reverse command and in a second turning state. When the traveling direction command from the controller 31 is reverse and the industrial vehicle 10 is turning in the second turning state, in addition to the central area A1, at least one of the left area A2 and the right area A3 is provided as the rear restriction area AR. In this state, the first traveling direction area A6 and the second traveling direction area A7 are provided as the side restriction area AS. The second turning state is a state in which the absolute value of the steering angle is greater than the second angle and is equal to or less than the third angle. The third angle is greater than the second angle. The third angle may be set appropriately within a range of 50 degrees to 70 degrees, for example. In the second turning state, the steering angle is larger than the steering angle when the industrial vehicle 10 is turning in the first turning state. When the industrial vehicle 10 is turning in the second turning state, for example, the industrial vehicle 10 is traveling through a right-angled passage.

The second turning state includes a second left turning state (the vehicle 10 is turning to the left) and a second right turning state (the vehicle 10 is turning to the right). When the industrial vehicle 10 is turning in the second left turning state, the steering angle is equal to or greater than a negative third angle and is less than the negative second angle. When the industrial vehicle 10 is turning in the second right turning state, the steering angle is equal to or less than a positive second angle and is greater than the positive second angle.

When the industrial vehicle 10 is traveling in reverse and turning in the second left turning state, the central area A1 and the left area A2 are provided as the rear restriction area AR. When the industrial vehicle 10 is traveling in reverse and turning in the second turning state, the first traveling direction area A6 is larger than the first traveling direction area A6 is in the first turning state. Specifically, a part of the first traveling direction area A6 from a position between the front wheels 12, 13 and the rear wheels 14, 15 to the rear end of the first traveling direction area A6 in the second turning state has a dimension, which is denoted as dimension L31, in the right-left direction, and the dimension L31 is longer than that is in the first turning state. The dimension L31 is the same as, for example, the dimension L12 of the left area A2 or the dimension L13 of the right area A3 in the right-left direction. When the industrial vehicle 10 is traveling in reverse and turning in the second turning state, the second traveling direction area A7 may have the same size as the second traveling direction area A7 in the first turning state.

When the industrial vehicle 10 is traveling in reverse and turning in the second left turning state, the first traveling direction area A6 extends along the left edge of the industrial vehicle 10. For example, the first traveling direction area A6 extends from the position adjacent to the left front wheel 12 to a position overlapping with the left area A2. The second traveling direction area A7 extends along the right edge of the industrial vehicle 10. For example, the second traveling direction area A7 extends forward from the position adjacent to the right front wheel 13 beyond the distal end of the fork 22.

When the industrial vehicle 10 is traveling in reverse and turning in the second right turning state, the central area A1 and the right area A3 are provided as the rear restriction area AR. When the industrial vehicle 10 is traveling in reverse and turning in the second right turning state, the first traveling direction area A6 extends along the right edge of the industrial vehicle 10. For example, the first traveling direction area A6 extends from the position adjacent to the right front wheel 13 to a position overlapping with the right area A3. The second traveling direction area A7 extends along the left edge of the industrial vehicle 10. For example, the second traveling direction area A7 extends forward from the position adjacent to the left front wheel 12 beyond the distal end of the fork 22.

FIG. 9 illustrates the start restriction area A when the industrial vehicle 10 is turning in the second left turning state. When the industrial vehicle 10 is turning in the second right turning state, the start restriction area A has a shape that is a right-left mirror image of the start restriction area A when the industrial vehicle 10 is turning in the second left turning state. Accordingly, the start restriction area A when the industrial vehicle 10 is turning in the second right turning state is not illustrated.

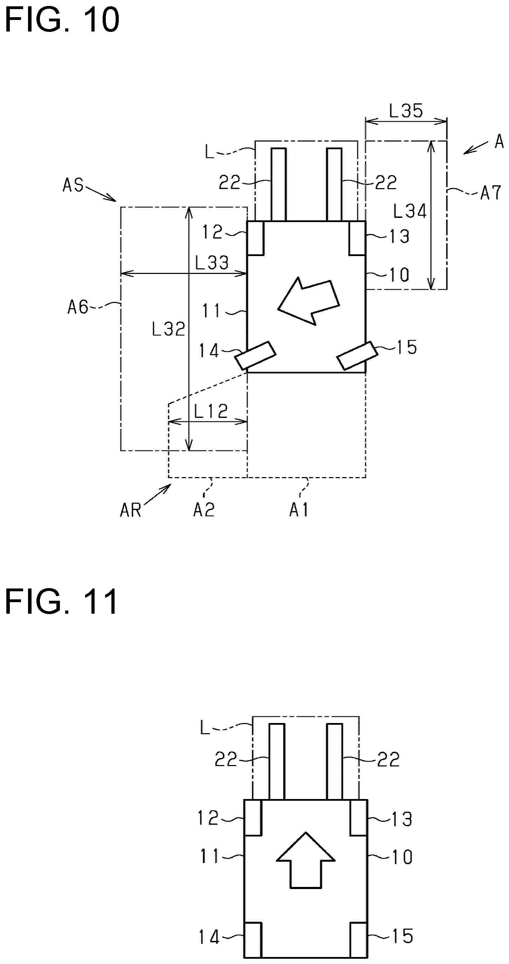

FIG. 10 illustrates the industrial vehicle 10 that is traveling in reverse in response to the reverse command and in a third turning state. When the traveling direction command from the controller 31 is reverse and the industrial vehicle 10 is turning in the third turning state, in addition to the central area A1, at least one of the left area A2 and the right area A3 is provided as the rear restriction area AR. **In** this state, the first traveling direction area A6 and the second traveling direction area A7 are provided as the side restriction area AS. The third turning state is a state in which the absolute value of the steering angle is greater than the third angle. In the third turning state, the steering angle is larger than the steering angle when the industrial vehicle 10 is turning in the second turning state. The third turning state is, for example, a state in which the industrial vehicle 10 turns on the spot.

The third turning state includes a third left turning state (the vehicle 10 is turning to the left) and a third right turning state (the vehicle 10 is turning to the right). When the industrial vehicle 10 is turning in the third left turning state, the steering angle is less than the negative third angle. When the industrial vehicle 10 is turning in the third right turning state, the steering angle is greater than the positive third angle.

When the industrial vehicle 10 is traveling in reverse and turning in the third left turning state, the central area A1 and the left area A2 are provided as the rear restriction area AR. When the industrial vehicle 10 is traveling in reverse and turning in the third turning state, the first traveling direction area A6 is larger than the first traveling direction area A6 is in the second turning state. The dimension of the first traveling direction area A6 in the front-rear direction is denoted as dimension L32, and the dimension L32 is longer than that is in the second turning state. For example, the dimension L32 of the first traveling direction area A6 in the front-rear direction is increased so that the front end of the first traveling direction area A6 is located in front of the front end of the vehicle body 11. The dimension of the first traveling direction area A6 in the right-left direction is denoted as dimension L33, and the dimension L33 is longer than that is in the first turning state. The dimension L33 is longer than the dimension L12 of the left area A2 or the dimension L13 of the right area A3 in the right-left direction, for example.

When the industrial vehicle 10 is traveling in reverse and turning in the third turning state, the second traveling direction area A7 is larger than the second traveling direction area A7 is in the second turning state. The dimension of the second traveling direction area A7 in the front-rear direction is denoted as dimension L34, and the dimension L34 is longer than that is in the second turning state. For example, the dimension L34 of the second traveling direction area A7 in the front-rear direction is increased so that the rear end of the second traveling direction area A7 is located behind the front wheels 12, 13. The dimension of the second traveling direction area A7 in the right-left direction is denoted as dimension L35, and the dimension L35 is longer than dimension L35 is in the second turning state. The dimension L35 is the same as, for example, the dimension L12 of the left area A2 or the dimension L13 of the right area A3 in the right-left direction.

When the industrial vehicle 10 is traveling in reverse and turning in the third left turning state, the first traveling direction area A6 extends along the left edge of the industrial vehicle 10. For example, the first traveling direction area A6 extends from the position adjacent to the fork 22 to a position overlapping with the left area A2. The second traveling direction area A7 extends along the right edge of the industrial vehicle 10. For example, the second traveling direction area A7 extends forward from a position behind the right front wheel 13 beyond the distal end of the fork 22.

When the industrial vehicle 10 is traveling in reverse and turning in the third right turning state, the central area A1 and the right area A3 are provided as the rear restriction area AR. When the industrial vehicle 10 is traveling in reverse and turning in the third right turning state, the first traveling direction area A6 extends along the right edge of the industrial vehicle 10. For example, the first traveling direction area A6 extends from the position adjacent to the fork 22 to a position overlapping with the right area A3. The second traveling direction area A7 extends along the left edge of the industrial vehicle 10. For example, the second traveling direction area A7 extends forward from a position behind the left front wheel 12 beyond the distal end of the fork 22.

FIG. 10 illustrates the start restriction area A when the industrial vehicle 10 is turning in the third left turning state. When the industrial vehicle 10 is turning in the third right turning state, the start restriction area A has a shape that is a right-left mirror image of the start restriction area A when the industrial vehicle 10 is turning in the third left turning state. Accordingly, the start restriction area A when the industrial vehicle 10 is turning in the third right turning state is not illustrated.

FIG. 11 illustrates the industrial vehicle 10 that is traveling forward in response to the forward command and travelling straight. When the traveling direction command from the controller 31 is forward and the industrial vehicle 10 is traveling straight forward, the start restriction area A is not provided.

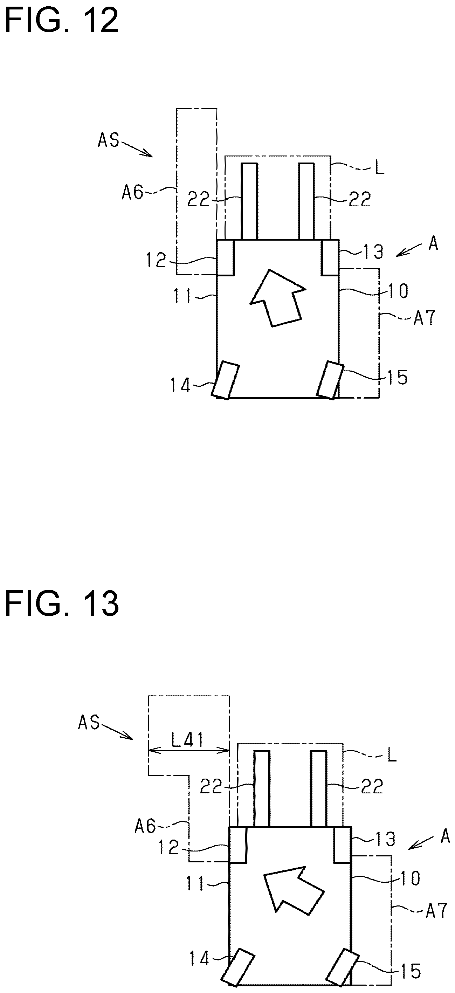

FIG. 12 illustrates the industrial vehicle 10 that is traveling forward in response to the forward command and turning in the first turning state. When the traveling direction command from the controller 31 is forward and the industrial vehicle 10 is turning in the first turning state, the rear restriction area AR is not provided. In this state, the first traveling direction area A6 and the second traveling direction area A7 are provided as the side restriction area AS.

When the industrial vehicle 10 is traveling forward, the first traveling direction area A6 is an area that extends forward beyond the front end of the fork 22. The first traveling direction area A6 provided when the traveling direction command is forward is longer in the forward direction than the second traveling direction area A7 provided when the traveling direction command is reverse. When the load L is handled by the forks 22, the first traveling direction area A6 provided when the traveling direction command is forward may extend forward beyond the front end of the load L.

The first traveling direction area A6 is a rectangular area and extends forward along the vehicle body 11 and beyond the distal end of the fork 22 from a position laterally adjacent to the front wheels 12, 13, for example.

When the industrial vehicle 10 is traveling forward, the second traveling direction area A7 is an area that extends rearward to the rear end of the vehicle body 11. The second traveling direction area A7 is a rectangular area and extends rearward along the vehicle body 11 to the rear end of the vehicle body 11 from a position laterally adjacent to the front wheels 12, 13, for example.

When the industrial vehicle 10 is traveling forward and turning in the first left turning state, the first traveling direction area A6 extends along the left edge of the industrial vehicle 10. For example, the first traveling direction area A6 is a rectangular area and extends forward from the position adjacent to the left front wheel 12 beyond the distal end of the fork 22. The second traveling direction area A7 extends along the right edge of the industrial vehicle 10. For example, the second traveling direction area A7 is a rectangular area and extends rearward from the position adjacent to the right front wheel 13 to the rear end of the vehicle body 11.

When the industrial vehicle 10 is traveling forward and turning in the first right turning state, the first traveling direction area A6 extends along the right edge of the industrial vehicle 10. For example, the first traveling direction area A6 is a rectangular area and extends forward from the position adjacent to the right front wheel 13 beyond the distal ends of the forks 22. The second traveling direction area A7 extends along the left edge of the industrial vehicle 10. For example, the second traveling direction area A7 is a rectangular area and extends rearward from the position adjacent to the left front wheel 12 to the rear end of the vehicle body 11.

FIG. 12 illustrates the start restriction area A when the industrial vehicle 10 is turning in the first left turning state. When the industrial vehicle 10 is turning in the first right turning state, the start restriction area A has a shape that is a right-left mirror image of the start restriction area A when the industrial vehicle 10 is turning in the first left turning state. Accordingly, the start restriction area A when the industrial vehicle 10 is turning in the first right turning state is not illustrated.

FIG. 13 illustrates the industrial vehicle 10 that is traveling forward in response to the forward command and turning in the second turning state. When the traveling direction command from the controller 31 is forward and the industrial vehicle 10 is turning in the second turning state, the rear restriction area AR is not provided. In this state, the first traveling direction area A6 and the second traveling direction area A7 are provided as the side restriction area AS.

When the industrial vehicle 10 is traveling forward and turning in the second turning state, the first traveling direction area A6 is larger than the first traveling direction area A6 is in the first turning state. Specifically, a part of the first traveling direction area A6 from the position laterally adjacent to the fork 22 to the front end of the first traveling direction area A6 in the second turning state has a dimension, which is denoted as dimension L41, in the right-left direction, and the dimension L41 is longer than that is in the first turning state. The dimension L41 is the same as, for example, the dimension L12 of the left area A2 or the dimension L13 of the right area A3 in the right-left direction. When the industrial vehicle 10 is traveling forward and turning in the second turning state, the second traveling direction area A7 may have the same size as the second traveling direction area A7 in the first turning state.

When the industrial vehicle 10 is traveling forward and turning in the second left turning state, the first traveling direction area A6 extends along the left edge of the industrial vehicle 10. For example, the first traveling direction area A6 extends forward from the position adjacent to the left front wheel 12 beyond the distal end of the fork 22. The second traveling direction area A7 extends along the right edge of the industrial vehicle 10. For example, the second traveling direction area A7 extends rearward from the position adjacent to the right front wheel 13 to the rear end of the vehicle body 11.

When the industrial vehicle 10 is traveling forward and turning in the second right turning state, the first traveling direction area A6 extends along the right edge of the industrial vehicle 10. For example, the first traveling direction area A6 extends forward from the position adjacent to the right front wheel 13 beyond the distal end of the fork 22. The second traveling direction area A7 extends along the left edge of the industrial vehicle 10. For example, the second traveling direction area A7 extends rearward from the position adjacent to the left front wheel 12 to the rear end of the vehicle body 11.

FIG. 13 illustrates the start restriction area A when the industrial vehicle 10 is turning in the second left turning state. When the industrial vehicle 10 is turning in the second right turning state, the start restriction area A has a shape that is a right-left mirror image of the start restriction area A when the industrial vehicle 10 is turning in the second left turning state. Accordingly, the start restriction area A when the industrial vehicle 10 is turning in the second right turning state is not illustrated.

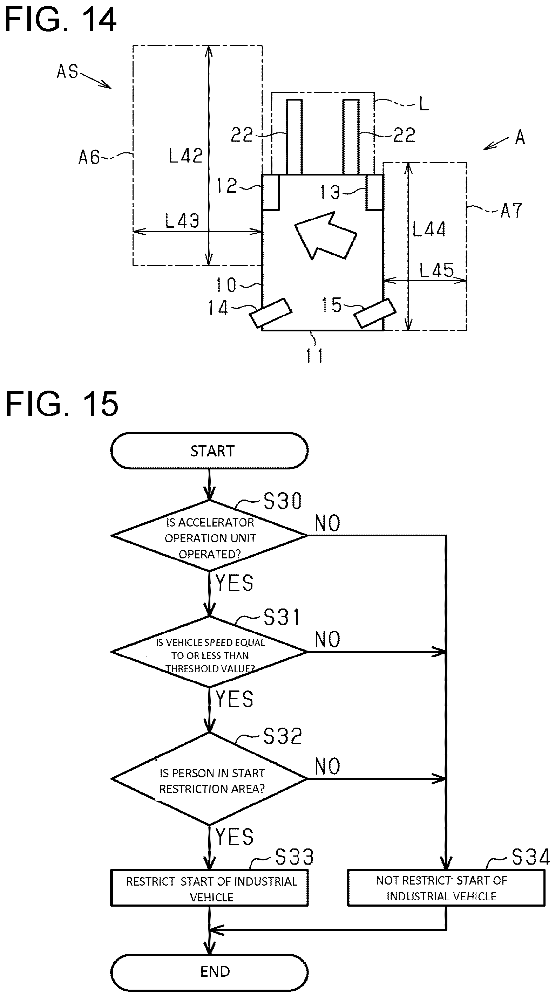

FIG. 14 illustrates the industrial vehicle 10 that is traveling forward in response to the forward command and turning in the third turning state. When the traveling direction command from the controller 31 is forward and the industrial vehicle 10 is turning in the third turning state, the rear restriction area AR is not provided. In this state, the first traveling direction area A6 and the second traveling direction area A7 are provided as the side restriction area AS.

When the industrial vehicle 10 is traveling forward and turning in the third turning state, the first traveling direction area A6 is larger than the first traveling direction area A6 is in the second turning state. The dimension of the first traveling direction area A6 in the front-rear direction is denoted as dimension L42, and the dimension L42 is longer than that is in the second turning state. For example, the dimension L42 of the first traveling direction area A6 in the front-rear direction is increased so that the rear end of the first traveling direction area A6 is located between the front wheels 12, 13 and the rear wheels 14, 15. The dimension of the first traveling direction area A6 in the right-left direction is denoted as dimension L43, and the dimension L43 is longer than that is in the first turning state. The dimension L43 is longer than the dimension L12 of the left area A2 or the dimension L13 of the right area A3 in the right-left direction, for example.

When the industrial vehicle 10 is traveling forward and turning in the third turning state, the second traveling direction area A7 is larger than the second traveling direction area A7 is in the second turning state. The dimension of the second traveling direction area A7 in the front-rear direction is denoted as dimension L44, and the dimension L44 is longer than that is in the second turning state. For example, the dimension L44 of the second traveling direction area A7 in the front-rear direction is increased so that the front end of the second traveling direction area A7 is located in front of the front wheels 12, 13. The dimension of the second traveling direction area A7 in the right-left direction is denoted as dimension L45, and the dimension L45 is longer than that is in the second turning state. The dimension L45 is the same as, for example, the dimension L12 of the left area A2 or the dimension L13 of the right area A3 in the right-left direction.

When the industrial vehicle 10 is traveling forward and turning in the third left turning state, the first traveling direction area A6 extends along the left edge of the industrial vehicle 10. For example, the first traveling direction area A6 extends forward from a position located between the left front wheel 12 and the left rear wheel 14 beyond the distal end of the fork 22. The second traveling direction area A7 extends along the right edge of the industrial vehicle 10. For example, the second traveling direction area A7 extends rearward from a position in front of the right front wheel 13 to the rear end of the vehicle body 11.

When the industrial vehicle 10 is traveling forward and turning in the third right turning state, the first traveling direction area A6 extends along the right edge of the industrial vehicle 10. For example, the first traveling direction area A6 extends forward from a position located between the right front wheel 13 and the right rear wheel 15 beyond the distal end of the fork 22. The second traveling direction area A7 extends along the left edge of the industrial vehicle 10. For example, the second traveling direction area A7 extends rearward from a position in front of the left front wheel 12 to the rear end of the vehicle body 11.

FIG. 14 illustrates the start restriction area A when the industrial vehicle 10 is turning in the third left turning state. When the industrial vehicle 10 is turning in the third right turning state, the start restriction area A has a shape that is a right-left mirror image of the start restriction area A when the industrial vehicle 10 is turning in the third left turning state. Accordingly, the start restriction area A when the industrial vehicle 10 is turning in the third right turning state is not illustrated.

As the steering angle increases, the first traveling direction area A6 and the second traveling direction area A7 increase. According to the present embodiment, the first traveling direction area A6 and the second traveling direction area A7 are increased in stages according to the turning state. When the absolute value of the steering angle becomes greater than the second angle and the turning state changes from the first turning state to the second turning state, the first traveling direction area A6 increases. When the absolute value of the steering angle becomes greater than the third angle and the turning state changes from the second turning state to the third turning state, the second traveling direction area A7 increases. The first traveling direction area A6 serves as the start restriction area A located in the traveling direction. The second traveling direction area A7 serves as the start restriction area A located opposite to the traveling direction.

The following will describe a start restriction control. The start restriction control is repeatedly performed at a predetermined control period, for example, while the ignition key of the industrial vehicle 10 is turned to the ON position. The industrial vehicle 10 is ready to travel when the ignition key is turned to the ON position.

As illustrated in FIG. 15, the controller 31 determines at step S30 whether or not the accelerator operation unit 34 is operated by the operator of the industrial vehicle 10. The controller 31 determines whether or not the accelerator operation unit 34 is operated based on the detection result of the accelerator sensor 35. If the controller 31 determines at step S30 that the accelerator operation unit 34 is operated, the controller 31 performs step S31. If the controller 31 determines at step S30 that the accelerator operation unit 34 is not operated, the controller 31 performs step S34.

At step S31, the controller 31 determines whether or not the vehicle speed [km/h] of the industrial vehicle 10 is equal to or less than a threshold value. The vehicle speed of the industrial vehicle 10 is derived from the rotational speed and rotational direction of the drive motor 41 provided for each of the front wheel 12 and the front wheel 13, the gear ratio, the outer diameters of the front wheels 12, 13, and the steering angle detected by the steering angle sensor 38, and the like. The rotational speed and the rotational direction of the drive motor 41 may be obtained from the travel controller 43. The gear ratio and the outer diameters of the front wheels 12, 13 may be stored in the memory 33 in advance.

The threshold value is determined so that it is possible to determine whether or not the industrial vehicle 10 is stopped. The threshold value may be 0 [km/h]. The threshold value may be set to a value greater than zero, taking into account measurement errors. For example, the threshold value is defined within a range of 0 [km/h] to 0.5 [km/h]. When the vehicle speed of the industrial vehicle 10 is equal to or less than the threshold value, the industrial vehicle 10 is stopped. If the controller 31 determines at step S31 that the vehicle speed [km/h] of the industrial vehicle 10 is equal to or less than the threshold value, the controller 31 performs step S32. If the controller 31 determines at step S31 that the vehicle speed [km/h] of the industrial vehicle 10 is not equal to or less than the threshold value, the controller 31 performs step S34.

At step S32, the controller 31 determines whether or not there is a person in the start restriction area A. Firstly, the controller 31 acquires the coordinates of a person in the world coordinate system from the detector 56. The controller 31 then determines whether or not there is a person in the start restriction area A that is provided based on the traveling direction and the steering angle. The start restriction area A is defined by XY coordinates of the world coordinate system. This allows the presence of a person in the start restriction area A to be detected by determining whether or not the acquired XY coordinates of a person in the world coordinate system are within the start restriction area A defined by the XY coordinates of the world coordinate system. If the controller 31 determines at step S32 that a person is present in the start restriction area A, the controller 31 performs step S33. If the controller 31 determines at step S32 that a person is not present in the start restriction area A, the controller 31 performs step S34.

At step S33, the controller 31 restricts the industrial vehicle 10 from starting to move. The start restriction is performed to restrict the industrial vehicle 10, which is stopped, from starting to move. Starting to move means increasing the vehicle speed of the industrial vehicle 10 from a speed equal to or lower than the threshold value to a speed higher than the threshold value. The start restriction is performed, for example, by setting an upper vehicle speed limit. When the start restriction is not performed, a target vehicle speed is set based on the operation amount of the accelerator operation unit 34, and the vehicle speed of the industrial vehicle 10 is controlled so that the vehicle speed of the industrial vehicle 10 follows the target vehicle speed. Since the target vehicle speed is not set beyond the upper vehicle speed limit, the industrial vehicle 10 is prohibited from traveling at a vehicle speed that exceeds the upper vehicle speed limit. The start restriction may mean start prohibition. For the start prohibition, the upper vehicle speed limit is set to zero. Alternatively, the upper vehicle speed limit may be set to a value greater than zero, and the industrial vehicle 10 may be prohibited from starting to move at a vehicle speed higher than the upper vehicle speed limit.

At step S34, the controller 31 does not restrict the industrial vehicle 10 from starting to move. The controller 31 causes the industrial vehicle 10 to start at a vehicle speed based on the operation amount of the accelerator operation unit 34.

The following will describe the operation of the industrial vehicle according to the present embodiment. The controller 31 determines the start restriction area A based on the traveling direction and the steering angle. For example, when the industrial vehicle 10 travels straight in reverse, only the central area A1 is provided as the start restriction area A. When the industrial vehicle 10 travels straight, the travel amount of the industrial vehicle 10 in the right-left direction is small. Accordingly, the side restriction area AS is not provided. When the industrial vehicle 10 is traveling in reverse and turning in the first turning state, in addition to the central area A1, the left area A2 or the right area A3 is provided as the start restriction area A based on the steering angle. Furthermore, the first traveling direction area A6 and the second traveling direction area A7 are provided as the start restriction area A. When the industrial vehicle 10 turns while traveling in reverse, the front end and the rear end of the vehicle body 11 move in the right-left direction. **If** the industrial vehicle 10 turns to the left, the rear end of the vehicle body 11 moves leftward and the front end of the vehicle body 11 moves rightward. Accordingly, the first traveling direction area A6 and the second traveling direction area A7 are formed along the left edge and the right edge of the industrial vehicle 10, respectively.

By setting the start restriction area A in this manner, the industrial vehicle 10 is restricted from starting to move when there is a person in an area where the industrial vehicle 10 is expected to pass. On the other hand, when there is a person in an area different from the area where the industrial vehicle 10 is expected to pass, the industrial vehicle 10 is not restricted from starting to move. This improves the work efficiency.

The traveling direction of the industrial vehicle 10 is often changed while the industrial vehicle 10 is stopped. Accordingly, the industrial vehicle 10 frequently starts moving forward or in reverse from a stopped condition. If the industrial vehicle 10 is a forklift truck, the forklift truck often starts moving in reverse after performing load handling while stopped. In an environment in which the industrial vehicle 10 is operated, people working around the industrial vehicle 10 may approach the stopped industrial vehicle 10. For this reason, there is a strong need to restrict the start of the movement of the industrial vehicle 10. The restriction of the start of the industrial vehicle 10 according to the present embodiment allows the industrial vehicle 10 to be prevented from coming into contact with an obstacle appropriately.

The following will describe advantageous effects of the embodiment.
(1) The controller 31 changes the start restriction area A based on the traveling direction and the steering angle of the industrial vehicle 10. The industrial vehicle 10 rotates about a turning center of the industrial vehicle 10. A portion of the industrial vehicle 10 on the side opposite to the traveling direction moves in the right-left direction, so that the industrial vehicle 10 may come into contact with an obstacle present in an area located opposite to the traveling direction of the industrial vehicle 10. According to the present embodiment, the start restriction area A is changed based on the traveling direction and the steering angle of the industrial vehicle 10 so that the industrial vehicle 10 is prevented from coming into contact with the obstacle present in the area located opposite to the traveling direction of the industrial vehicle 10. Specifically, not only the first traveling direction area A6, but also the second traveling direction area A7 may be provided as the start restriction area A. This prevents the industrial vehicle 10 from coming into contact with the obstacle present in the area located opposite to the traveling direction of the industrial vehicle 10.
(2) The controller 31 increases the first traveling direction area A6 as the steering angle increases. When the steering angle is large, the turning center moves closer to the industrial vehicle 10, and the travel amount of the industrial vehicle 10 in the right-left direction increases. This reduces contact between the industrial vehicle 10 and an obstacle present ahead of the industrial vehicle 10 in the traveling direction of the industrial vehicle 10.
(3) The controller 31 increases the second traveling direction area A7 as the steering angle increases. This reduces contact between the industrial vehicle 10 and the obstacle present in the area located opposite to the traveling direction of the industrial vehicle 10.
(4) The left camera 53 and the right camera 54 also serve as the front side detector of the present invention. This reduces the manufacturing costs compared to a case where a front side detector is provided separately. This also reduces the processing load on the detector 56.
(5) **In** the present embodiment, the side cameras 53, 54 are monocular cameras. Monocular cameras have lower object detection accuracy than stereo cameras. However, the use of monocular cameras as the side cameras 53, 54 allows reduction of the manufacturing costs compared to use of stereo cameras as the side cameras 53, 54.

When the industrial vehicle 10 travels in reverse, the travel amount of the industrial vehicle 10 in the right-left direction is less than the travel amount of the industrial vehicle 10 in reverse. This allows the side regions R2, R3 to be narrower than the rear region R1. This therefore enables the position of an obstacle to be detected accurately even if monocular cameras are used as the side cameras 53, 54 for detecting the position of an obstacle present in the side regions R2, R3. This therefore allows monocular cameras to be used as the side cameras 53, 54 to accurately detect the position of an obstacle present in the side regions R2, R3 and reduce the manufacturing costs.

(6) The controller 31 restricts the industrial vehicle 10 from starting to move when a person is present in the start restriction area A. If the obstacle is a physical object other than a person, the industrial vehicle 10 is not restricted from starting to move, which leads to an increase in work efficiency. For example, if the industrial vehicle 10 is prevented from starting to move due to a wall around the industrial vehicle 10 or the load L to be handled, work efficiency may decrease. However, the industrial vehicle 10 according to the present embodiment is not restricted from starting to move by a wall or the load L to be handled, so that work efficiency is increased.

(7) According to the present embodiment, even when the traveling direction command is neutral, the start restriction area A is provided. If an obstacle is present in the start restriction area A, the alarm unit 55 may issue an alarm. The presence of the start restriction area A allows the alarm unit 55 to issue an alarm even when the traveling direction command is neutral.

The present embodiment may be modified and implemented as follows. The present embodiment and the following modifications may be implemented in combination with each other within a technically consistent range.

The controller 31 may restrict the industrial vehicle 10 from starting to move when a physical object other than a person is present in the start restriction area A.

The industrial vehicle 10 may be provided with a single camera equipped with a lens with a wide viewing angle, such as a fisheye lens. In this case, the camera may be used to detect obstacles in the right area A3 and the left area A2. That is, a single camera may serve as the left side detector, the right side detector, and the front side detector of the present invention. Furthermore, when the camera is configured to detect an obstacle in the rear region R1, the single camera may serve as the left side detector, the right side detector, the front side detector, and the rear side detector of the present invention.

The side cameras 53, 54 may be stereo cameras.

The controller 31 may increase either the first traveling direction area A6 or the second traveling direction area A7 as the steering angle increases.

According to the present embodiment, the side restriction area AS is increased in stages according to the turning state, such as the first turning state, the second turning state, and the third turning state. However, the present invention is not limited thereto. For example, the size of the side restriction area AS may be changed more finely by increasing the number of turning states. Alternatively, the second turning state and the third turning state may be removed to reduce the number of stages to change the size of the side restriction area AS.

At least one of the first traveling direction area A6 and the second traveling direction area A7 may be continuously changed in size based on the steering angle.

The front side detector, the rear side detector, the right side detector, and the left side detector should be sensors that are configured to detect the position of an obstacle. For example, at least one of the front side detector, the rear side detector, the right side detector, and the left side detector may be a light detection and ranging (LiDAR) or a radar.

The detector 56 may use an object detection model to detect a person from an image. For example, when detecting an obstacle behind the vehicle, the detector 56 may detect the position of the obstacle by stereo processing, and may also detect a person from the image by inputting the image into the object detection model.

The object detection model is generated through machine learning using deep neural network (DNN). The object detection model uses an algorithm that allows determination of the class of the object on a region-by-region basis. Examples of machine learning algorithms include YOLO-Pose, single shot multibox detector (SSD), regional convolutional neural network (R-CNN), fast R-CNN, and faster R-CNN.

The object detection model outputs the probability that an obstacle in the image is a person by defining "person" as a class. This allows the detector 56 to determine from the output of the object detection model whether or not a person is present in the image. If a person is present in the image, the detector 56 recognizes the position of the person from the position of the obstacle detected using stereo disparity.

Furthermore, this allows a physical object other than a person to be detected by defining physical object other than a person as a class.

The detector 56 may detect a person present on the side of the industrial vehicle 10 by inputting images acquired from the side cameras 53, 54 into an object detection model. The detector 56 inputs the images into an object detection model similar to the object detection model according to the modified example previously described. This allows the position of the person in the image and the position of the person's feet to be estimated. The detector 56 then calculates the position of the person in the world coordinate system from the installation height, angle, and focal length of the side cameras 53, 54, and the estimated position of the person's feet. Furthermore, the position of an obstacle behind the industrial vehicle 10 may be calculated by a method similar to that described above without performing stereo processing. In this case, the stereo camera 52 may be replaced with a monocular camera.

When detecting an obstacle behind or on the side of the industrial vehicle 10, the detector 56 may preferentially detect either a person or another physical object. For example, the detector 56 may preferentially detect a physical object other than a person in an area where person-entry is prohibited, such as a no-entry area. The detector 56 may preferentially detect a person in a high pedestrian traffic area.

The industrial vehicle 10 may be an automatic vehicle.

The forklift truck may be a reach truck. In this case, the direction operation unit 36 may also serve as the accelerator operation unit 34.

In the present invention, "at least one" means "one or more". In one example, if there are two desirable options, "at least one of the options" means "one of the two options" or "both of the two options". In another example, if there are three or more desirable options, "at least one of the options" means "one of the options" or "a combination of any two or more options".

## Claims

1. An industrial vehicle (10) comprising:
a vehicle body (11);
a detector (52, 53, 54) configured to detect an obstacle present around the vehicle body (11); and
a controller (31) configured to restrict the industrial vehicle (10) from starting to move when the obstacle detected by the detector (52, 53, 54) is present in a start restriction area (A),
**characterized in that**
the detector (52, 53, 54) includes:
a front side detector (53, 54) configured to detect the obstacle in front of the vehicle body (11);
a rear side detector (52) configured to detect the obstacle present behind the vehicle body (11);
a left side detector (53) configured to detect the obstacle present on the left side of the vehicle body (11); and
a right side detector (54) configured to detect the obstacle present on the right side of the vehicle body (11), and
the controller (31) changes the start restriction area (A) based on a traveling direction and a steering angle of the industrial vehicle (10).

2. The industrial vehicle (10) according to claim 1, wherein the controller (31) increases the start restriction area (A) located in the traveling direction as the steering angle increases.

3. The industrial vehicle (10) according to claim 1, wherein the controller (31) increases the start restriction area (A) located opposite to the traveling direction as the steering angle increases.

4. The industrial vehicle (10) according to claim 1, 2, or 3, wherein the left side detector (53) and the right side detector (54) also serve as the front side detector (53, 54).

5. The industrial vehicle (10) according to any one of claims 1-4, wherein the left side detector (53) and the right side detector (54) are monocular cameras.

6. The industrial vehicle (10) according to any one of claims 1-5, wherein
the obstacle includes a person, and
the controller (31) restricts the industrial vehicle (10) from starting to move when the person is present in the start restriction area (A).
